(19) Europäisches Patentamt
European Patent Office
Office européen des brevets

(11) Veröffentlichungsnummer: **0 315 046 B1**

# (12) EUROPÄISCHE PATENTSCHRIFT

(45) Veröffentlichungstag der Patentschrift: **15.04.92**

(51) Int. Cl.5: **C09B 62/04**, D06P 1/382

(21) Anmeldenummer: **88117890.9**

(22) Anmeldetag: **27.10.88**

Die Akte enthält technische Angaben, die nach dem Eingang der Anmeldung eingereicht wurden und die nicht in dieser Patentschrift enthalten sind.

## (54) Kupfer-Formazanreaktivfarbstoffe.

(30) Priorität: **05.11.87 DE 3737536**

(43) Veröffentlichungstag der Anmeldung:
**10.05.89 Patentblatt 89/19**

(45) Bekanntmachung des Hinweises auf die Patenterteilung:
**15.04.92 Patentblatt 92/16**

(84) Benannte Vertragsstaaten:
**CH DE FR GB IT LI**

(56) Entgegenhaltungen:
**DE-A- 3 434 818**
**FR-A- 2 295 090**
**GB-A- 2 172 896**

(73) Patentinhaber: **BASF Aktiengesellschaft**
**Carl-Bosch-Strasse 38**
**W-6700 Ludwigshafen(DE)**

(72) Erfinder: **Pandl, Klaus, Dr.**
**Schumannstrasse 18**
**W-6700 Ludwigshafen(DE)**
Erfinder: **Patsch, Manfred, Dr.**
**Fritz-Wendel-Strasse 4**
**W-6706 Wachenheim(DE)**

EP 0 315 046 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Reaktivfarbstoffe, die einen Chromophor auf Basis eines Kupfer-Formazanfarbstoffs aufweisen und als reaktive Gruppe einen Monofluor- oder Monochlortriazinanker tragen, sowie ihre Verwendung zum Färben von Cellulosefasern.

Aus der DE-A-3 434 818 sind Kupfer-Formazanreaktivfarbstoffe bekannt, die einen Monochlortriazinrest als Reaktivankersystem aufweisen. Es hat sich jedoch gezeigt, daß die dort beschriebenen Farbstoffe ungenügende anwendungstechnische Eigenschaften, z.B. unzureichende Löslichkeit im Färbebad, geringe Farbstärke sowie ungenügendes Farbaufbauvermögen bei Anwendung in Färbeverfahren für mittlere oder tiefe Farbstärken besitzen.

Aufgabe der vorliegenden Erfindung war es nun, neue Kupfer-Formazanreaktivfarbstoffe bereitzustellen, die die genannten Mängel nicht mehr aufweisen.

Es wurden neue Kupfer-Formazanreaktivfarbstoffe der Formel I

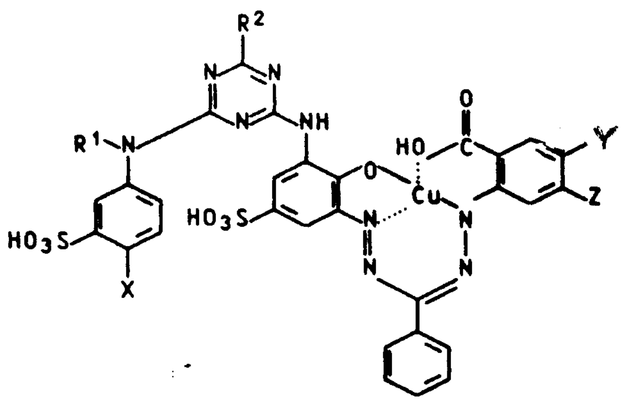

(I),

in der

X Cyano, Halogen, $C_1$-$C_4$-Alkyl oder $C_1$-$C_4$-Alkoxy,

einer der beiden Reste Y und Z Wasserstoff und der andere Hydroxysulfonyl,

$R^1$ Wasserstoff, $C_1$-$C_4$-Alkyl oder durch Cyano oder Carbamoyl substituiertes $C_2$-$C_4$-Alkyl und

$R^2$ Fluor oder Chlor bedeuten,

sowie deren Salze gefunden.

Alle in der obengenannten Formel auftretenden Alkylgruppen können sowohl geradkettig als auch verzweigt sein.

X und R bedeuten z.B. Methyl, Ethyl, Propyl, Isopropyl, Butyl, Isobutyl oder sec-Butyl.

X bedeutet weiterhin z.B. Methoxy, Ethoxy, Propoxy, Isopropoxy, Butoxy oder Isobutoxy.

$R^1$ bedeutet weiterhin z.B. 2-Cyanoethyl, 2-Cyanopropyl, 3-Cyanopropyl, 1-Cyanoprop-2-yl, Z-Cyanoprop-2-yl, 2-Cyanobutyl, 4-Cyanobutyl, 2-Aminocarbonylethyl, 2-Aminocarbonylpropyl, 3-Aminocarbonylpropyl, 2-Aminocarbonylbutyl oder 4-Aminocarbonylbutyl.

Als Salze der Kupfer-Formazanreaktivfarbstoffe der Formel I kommen Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl, -Tetraalkyl oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei in diesem Zusammenhang im allgemeinen geradkettiges oder verzweigtes $C_1$-$C_{20}$-Alkyl zu verstehen, das durch Hydroxylgruppen substituiert und/oder durch Sauerstoffatome unterbrochen sein kann.

Bevorzugt sind Kupfer-Formazanreaktivfarbstoffe der Formel I, in der X Halogen, insbesondere Chlor bedeutet. Weiterhin bevorzugt sind Kupfer-Formazanreaktivfarbstoffe der Formel I, in der $R^1$ Wasserstoff bedeutet.

Hervorzuheben sind insbesondere solche Kupfer-Formazanreaktivfarbstoffe der Formel I, in der $R^2$ Chlor bedeutet.

Die neuen Kupfer-Formazanreaktivfarbstoffe der Formel I können nach an sich bekannten Methoden hergestellt werden. Beispielsweise erhält man sie durch Umsetzung von Cyanurfluorid oder Cyanurchlorid

mit einem Kupfer-Formazanfarbstoff der Formel II

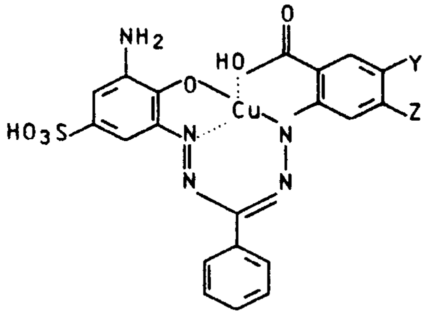

(II),

in der Y und Z jeweils die obengenannte Bedeutung besitzen, wobei ein Farbstoff der Formel III

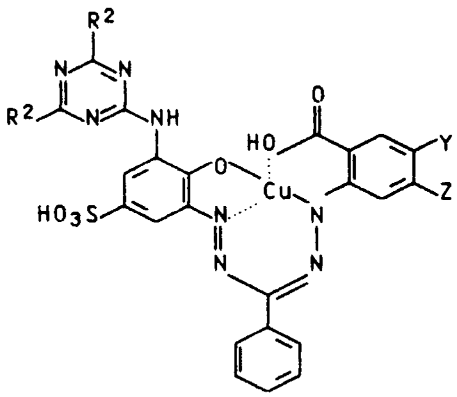

(III),

in der $R^2$, Y und Z jeweils die obengenannte Bedeutung besitzen, entsteht, der dann durch Weiterreaktion mit einem Amin der Formel IV

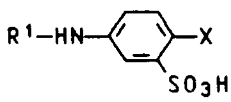

(IV),

in der $R^1$ und X jeweils die obengenannte Bedeutung besitzen, in den erfindungsgemäßen Farbstoff der Formel I übergeführt wird.

Der Kupfer-Formazanfarbstoff der Formel II kann ebenfalls nach an sich bekannten Methoden hergestellt werden. Beispielsweise erhält man ihn, wenn man das Diazoniumsalz von 1-Hydroxy-2-amino-6-acetylaminobenzol-4-sulfonsäure mit einem Phenylhydrazon der Formel V

(V),

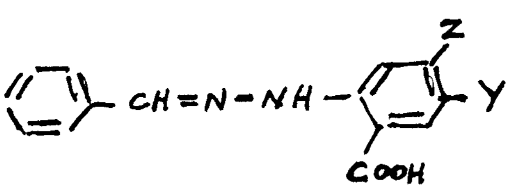

in der Y und Z jeweils die obengenannte Bedeutung besitzen, kuppelt, anschließend aus dem Reaktionsprodukt den Kupfer-Komplex durch Umsetzung mit Kupfersulfat oder Kupferchlorid herstellt und schließlich durch Hydrolyse die Acetylaminogruppe in die freie Aminogruppe überführt (vgl. Houben-Weyl, Methoden der Organischen Chemie, Band 10/2, Seiten 487 und 488, 1967).

Weitere Angaben zur Herstellung können den Beispielen entnommen werden.

Die neuen Kupfer-Formazanreaktivfarbstoffe der Formel I eignen sich zum Färben von Cellulosefasern. Sie ergeben dabei Ausfärbungen von mittelblauen Tönen. Die erfindungsgemäßen Farbstoffe weisen eine ausgezeichnete Löslichkeit sowohl in Wasser als auch in bis zu 30 gew.%igen wäßrigen Kochsalzlösungen auf. Sie besitzen ein sehr hoch liegendes Echtheitsniveau sowie hohe Farbstärke. Das Farbaufbauvermögen bei mittleren bis tiefen Färbungen ist besonders hoch.

Die folgenden Beispiele sollen die Erfindung näher erläutern.

Beispiel 1

Zu einer Lösung von 124 g des Natriumsalzes der Verbindung der Formel

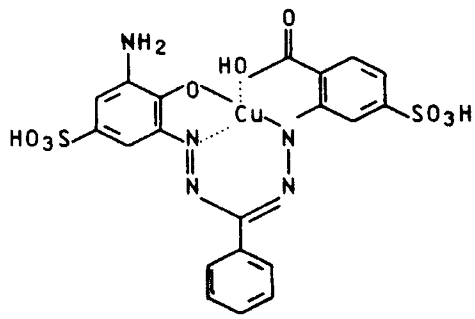

in 300 ml Wasser und 300 g Eis wurden 39 g Cyanurchlorid gegeben. Der pH-Wert des Reaktionsgemischs wurde bis zum Ende der Acylierung durch Zugabe von Natriumhydrogencarbonat bei 5 bis 5,5 gehalten. Nach 2 Stunden wurden 44 g 2-Chlor-5-aminobenzolsulfonsäure, gelöst in 200 ml Wasser, eingetragen. Die Suspension wurde auf 45 °C erwärmt, und der pH-Wert des Reaktionsgemischs wurde durch Zusatz von Natriumhydrogencarbonat bei 7 bis 8 gehalten. Nach 3 Stunden wurde der gebildete Farbstoff der Formel

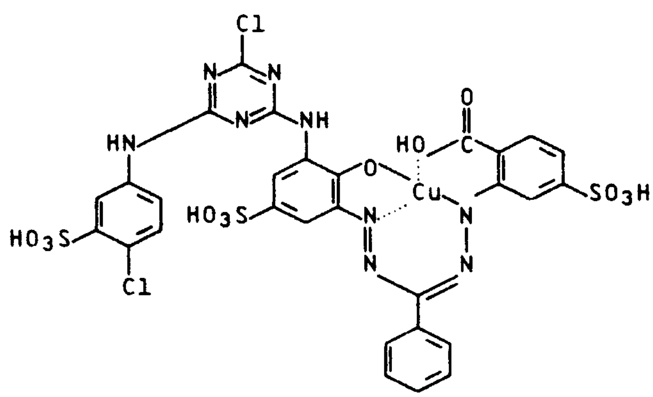

mittels einer Mischung von Natriumchlorid und Kaliumchlorid in Form eines Natriumsalzes ausgesalzen, abfiltriert und getrocknet. Das erhaltene dunkelblaue Farbstoffpulver ist ausgezeichnet wasserlöslich und färbt Baumwolle in klaren blauen Tönen. Die Färbungen sind licht- und naßecht. Sie weisen eine bemerkenswerte Stabilität gegenüber oxidativen Einflüssen auf.

Beispiel 2

44 g 2-Chlor-5-aminobenzolsulfonsäure wurden in 600 ml Wasser angerührt und bei 0 °C und einem pH-Wert von 1,4 mit 28 g Trifluortriazin versetzt. Während der Triazinzugabe wurde der pH-Wert mit $NaHCO_3$ unter 2 gehalten. Nach 1 Stunde wurden 124 g des Natriumsalzes der Verbindung der Formel

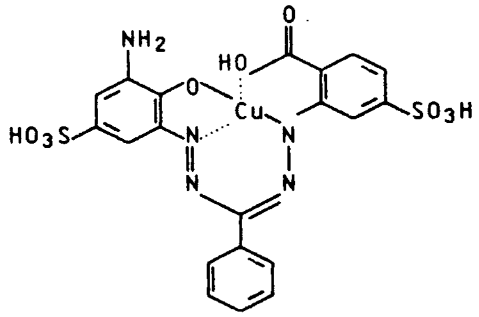

hinzugegeben und die Reaktionstemperatur wurde auf 20 ° C erhöht. Während 1,5 Stunden wurde durch Zugabe von $NaHCO_3$ der pH-Wert zwischen 7 und 7,5 gehalten. Danach wurde der gebildete Farbstoff der Formel

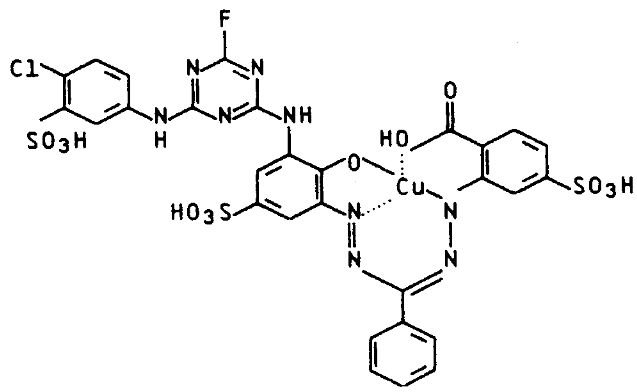

mittels Natriumchlorid in Form eines Natriumsalzes ausgesalzen, abfiltriert und getrocknet. Das erhaltene dunkelblaue Farbstoffpulver ist ausgezeichnet wasserlöslich und färbt Baumwolle in klaren blauen Tönen. Die Färbungen sind licht- und naßecht. Sie weisen eine bemerkenswerte Stabilität gegenüber oxidativen Einflüssen auf.

In analoger Weise werden die in der folgenden Tabelle aufgeführten Farbstoffe der Formel

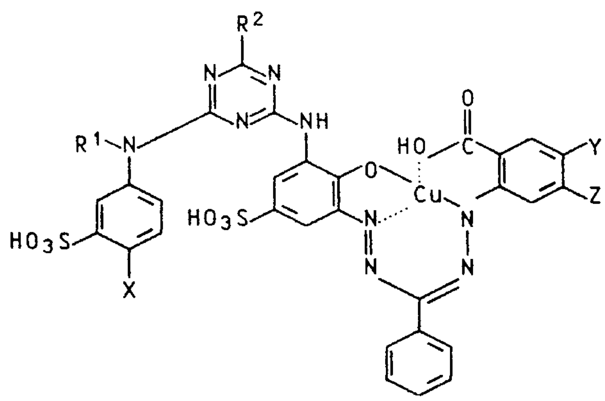

erhalten. Bei Anwendung der üblichen Ausziehmethode färben sie Cellulosefasern in blauen Tönen. Die Farbstoffe besitzen eine sehr gute Löslichkeit in Wasser, sind licht- und naßecht und zeigen gute Stabilität gegenüber oxidativen Einflüssen.

| Bsp. Nr. | $R^1$ | X | Y | Z | $R^2$ |
|---|---|---|---|---|---|
| 3 | H | $OCH_3$ | H | $SO_3H$ | Cl |
| 4 | H | $CH_3$ | H | $SO_3H$ | Cl |
| 5 | $CH_3$ | Cl | H | $SO_3H$ | Cl |
| 6 | $CH_3$ | $CH_3$ | H | $SO_3H$ | Cl |
| 7 | H | Cl | $SO_3H$ | H | Cl |
| 8 | H | $CH_3$ | $SO_3H$ | H | Cl |
| 9 | H | $OCH_3$ | $SO_3H$ | H | Cl |
| 10 | $CH_3$ | $CH_3$ | $SO_3H$ | H | Cl |
| 11 | H | $OCH_3$ | H | $SO_3H$ | F |
| 12 | H | $CH_3$ | H | $SO_3H$ | F |
| 13 | $CH_3$ | Cl | H | $SO_3H$ | F |
| 14 | $CH_3$ | $CH_3$ | H | $SO_3H$ | F |
| 15 | H | Cl | $SO_3H$ | H | F |
| 16 | H | $CH_3$ | $SO_3H$ | H | F |
| 17 | H | $OCH_3$ | $SO_3H$ | H | F |
| 18 | $CH_3$ | $CH_3$ | $SO_3H$ | H | F |
| 19 | $CH_3$ | $CH_3$ | $SO_3H$ | H | F |

## Patentansprüche

1. Kupfer-Formazanreaktivfarbstoffe der Formel I

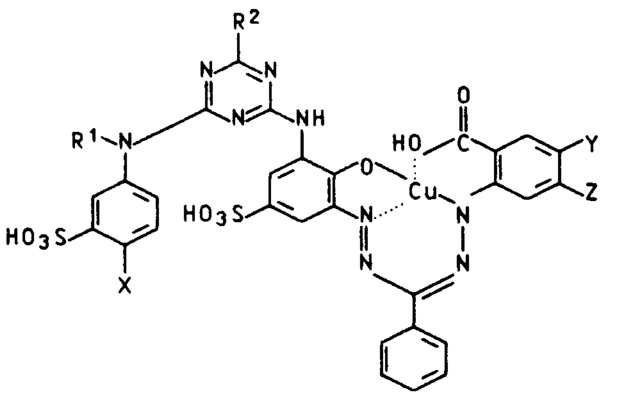

(I),

in der
X Cyano, Halogen, $C_1$-$C_4$-Alkyl oder $C_1$-$C_4$-Alkoxy,
einer der beiden Reste Y und Z Wasserstoff und der andere Hydroxysulfonyl,
$R^1$ Wasserstoff, $C_1$-$C_4$-Alkyl oder durch Cyano oder Carbamoyl substituiertes $C_2$-$C_4$-Alkyl und
$R^2$ Fluor oder Chlor bedeuten,
und ihre Salze.

2. Kupfer-Formazanreaktivfarbstoffe gemäß Anspruch 1, dadurch gekennzeichnet, daß X Halogen bedeutet.

3. Kupfer-Formazanreaktivfarbstoffe gemäß Anspruch 1, dadurch gekennzeichnet, daß $R^1$ Wasserstoff bedeutet.

4. Verwendung der Kupfer-Formazanreaktivfarbstoffe gemäß Anspruch 1 zum Färben von Cellulosefasern.

## Claims

1. A copper formazan reactive dye of the formula I

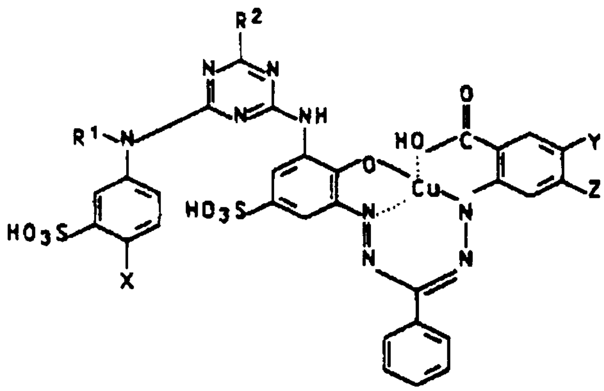

(I)

where X is cyano, halogen, $C_1$-$C_4$-alkyl or $C_1$-$C_4$-alkoxy, one of the two radicals Y and Z is hydrogen and the other hydroxysulfonyl, $R^1$ is hydrogen, $C_1$-$C_4$-alkyl or cyano- or carbamoyl-substituted $C_2$-$C_4$-alkyl and $R^2$ is fluorine or chlorine, or a salt thereof.

**2.** A copper formazan reactive dye as claimed in clad 1, wherein X is halogen.

**3.** A copper formazan reactive dye as claimed in clad 1, wherein $R^1$ is hydrogen.

**4.** Use of a copper formazan reactive dye as claimed in clad 1 for dyeing cellulose fibers.

## Revendications

**1.** Colorants réactifs du type formazan au cuivre de formule I

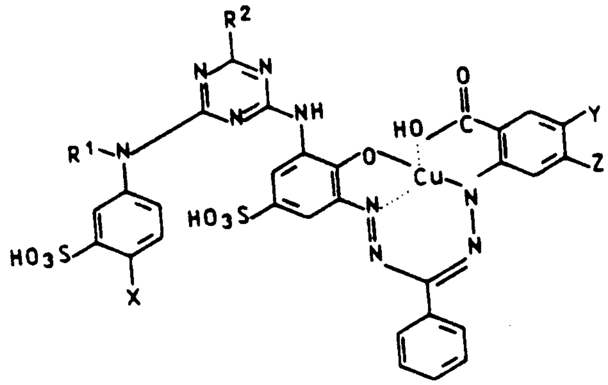

(I).

dans laquelle
X est un reste cyano, un atome d'halogène, un reste alkyle en $C_1$-$C_4$ ou alcoxy en $C_1$-$C_4$,
l'un des deux restes Y et Z est un atome d'hydrogène et l'autre est un reste hydroxysulfonyle,
$R^1$ est un atome d'hydrogène, un reste alkyle en $C_1$-$C_4$ ou alkyle en $C_2$-$C_4$ substitué par un radical cyano ou carbamoyle,
$R^2$ est un atome de fluor ou de chlore,
et leurs sels.

**2.** Colorants réactifs du type formazan au cuivre selon la revendication 1, caractérisés en ce que X représente un atome d'halogène.

**3.** Colorants réactifs du type formazan au cuivre selon la revendication 1, caractérisés en ce que $R^1$ représente un atome d'hydrogène.

**4.** Utilisation des colorants réactifs du type formazan au cuivre selon la revendication 1 pour la teinture de fibres de cellulose.